# Europäisches Patentamt

## European Patent Office

## Office européen des brevets

(19)

(11) Veröffentlichungsnummer: **0 114 073**
**B1**

(12) **EUROPÄISCHE PATENTSCHRIFT**

(45) Veröffentlichungstag der Patentschrift:
**04.10.89**

(51) Int. Cl.⁴: **G 06 F 15/16**

(21) Anmeldenummer: **84100363.5**

(22) Anmeldetag: **14.01.84**

(54) **Verfahren und Vorrichtung zur Übertragung von Nachrichten zwischen Automatisierungsmitteln.**

(30) Priorität: **17.01.83 DE 3301282**

(43) Veröffentlichungstag der Anmeldung:
**25.07.84 Patentblatt 84/30**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**BE-A-876 025**

**LOCAL NETWORKS FOR COMPUTER COMMUNICATIONS, PROCEEDINGS OF THE IFIP WORKING GROUP 6.4, Zürich, 27.-29. August 1980, Seiten 319-354, IFIP, Amsterdam, NL; R.F. RASHID: "An inter-process communication facility for unix" IBM TECHNICAL DISCLOSURE BULLETIN, Band 17, Nr. 4, September 1974, Seiten 991,992, New York, US; T.R. EDEL et al.: "Standard network functional protocol"**

(73) Patentinhaber: **Licentia Patent- Verwaltungs- GmbH, Theodor- Stern- Kai 1, D-6000 Frankfurt/Main 70 (DE)**

(72) Erfinder: **Ferling, Heinz- Dieter, Dr.- Ing., Semder Weg 12, D-6115 Altheim (DE)**

(74) Vertreter: **Lertes, Kurt, Dr., Licentia Patent- Verwaltungs- GmbH Theodor- Stern- Kai 1, D-6000 Frankfurt/M 70 (DE)**

## Beschreibung

Die Erfindung bezieht sich auf ein Verfahren und eine Vorrichtung zur Übertragung von Nachrichten zwischen Automatisierungsmitteln, die jeweils gleiche oder unterschiedliche innere Strukturen aufweisen und die als Teile eines Automatisierungssystems unmittelbar oder unter Zwischenschaltung eines oder mehrerer Automatisierungsmittel wahlweise jeweils als Sender und Empfänger über einen Nachrichtenweg miteinander in Verbindung stehen, wobei zur Auswahl eines Empfängers für eine Nachrichtenübertragung im jeweiligen Automatisierungsmittel Daten über den Typ der zu übertragenden Nachrichten eingegeben werden, die an einer vorab festgelegten Stelle in die zu übertragenden Nachrichten eingefügt und vom Sender in den für die Übertragungsleitungen vorgesehenen Code beim Senden umgewandelt sowie am Ende des Nachrichtenwegs vom Empfänger in dessen für die Informationseingabe vorgesehenen Code umgewandelt werden.

Es ist bereits ein Verfahren der vorstehend beschriebenen Gattung bekannt. Die Nachrichtenübertragung zwischen verschiedenen Rechnern mit verteilter Verarbeitungsleistung ist von der Maschinensprache, den Betriebssystemen und den inneren Strukturen der Rechner unabhängig. Die verschiedenen Rechner sind durch ein lokales Netz miteinander gekoppelt. Zwischen den Rechnern werden Nachrichten nach einem vorgegebenen Protokoll in strukturierter Form übertragen. Die Übertragung der Nachrichten erfolgt zwischen Ports, die durch das jeweilige Betriebssystem gebildet werden. Die Struktur der übertragenen Nachricht wird durch einen Kopfabschnitt bestimmt, der Angaben über den Bestimmungsport und den Typ der übertragenen Daten enthält. (Local Networks For Computer Communications, Proceeding of the IFIP Working Group 6.4, Zürich, 27. bis 29. August 1980, Seiten 319 bis 354, IFIP, Amsterdam, NC; R. F. Rashid: "An inter-process communications facility for unix".

Die Grundidee, Verarbeitungsleistung auf mehrere Rechner zu verteilen, fusst auf der Tatsache, dass die meisten zu automatisierenden Prozesse in relativ gut in sich abgeschlossene Teilprozesse zerlegt werden können. Die Betonung liegt dabei auf dem "in sich abgeschlossenen", da aus dieser Eigenschaft folgt, dass für eine vollständige Beherrschung des Gesamtablaufs nur verhältnismässig wenige Informationen zwischen Teilprozessen untereinander und einer koordinierenden Instanz (Leitfunktion) ausgetauscht werden müssen.

Je nach Aufgabenstellung und Aufgabenlösung erfordert die Führung eines Teilprozesses eine mehr oder weniger grosse Intelligenz und Verarbeitungsleistung. Deshalb werden Prozessoren und Rechner ganz unterschiedlicher Grösse und Leistungsfähigkeit und damit auch unterschiedlichen Typs zur Teilprozessautomatisierung eingesetzt. Das Spektrum reicht von der einfachen Komponente zur Lösung von Steuerungsaufgaben bis hin zum Prozessrechner für Leit- und Verwaltungsaufgaben.

Der Datenaustausch zwischen den einzelnen Rechnern des verteilten Systems können über Verbindungen mit bitserieller Datenübertragung erfolgen. Dabei können sowohl Verbindungswege mit Linienstruktur (serielle Datenbusse) als auch mit Sternstruktur vorkommen. Hierarchisch gegliederte Automatisierungssysteme enthalten mehrere physikalisch entkoppelte Übertragungswege, an denen verschiedene Rechner eines Teilsystems spezielle Teilaufgaben bearbeiten.

Diejenigen Rechner, die an mehr als einen Übertragungsweg angeschlossen sind, übernehmen neben ihren prozessbezogenen Aufgaben die Organisation des Datenaustausches zwischen den betroffenen Ebenen.

Aus der Tatsache, dass ganz unterschiedliche Prozessoren und Rechner in dem dargestellten System zusammmenarbeiten müssen, resultieren besondere Anforderungen an das Kommunikationssystem, das den Datenaustausch zwischen den Rechnern abwickelt. Je nachdem, ob mehr die physikalische Schnittstelle zwischen Rechner und Leitung, oder mehr die logische Schnittstelle zwischen Kommunikationssystem und Anwenderprogramm im Mittelpunkt der Betrachtungen steht, sind ganz verschiedene Gesichtspunkte zu berücksichtigen. In der Umgebung der physikalischen Schnittstelle zur Leitung ist für jeden Rechnertyp i. a. eine spezielle Hardware und Software notwendig, die den besonderen Eigenschaften des jeweiligen Prozessors und seiner Peripherie-Schnittstellen sowie seines Betriebssystems angepasst ist. Nur dadurch lassen sich die durch die Rechnerhardware festgeschriebenen oder durch strenge Zeitforderungen auf der Leitung vorgegebenen Randbedingungen erfüllen.

Anders dagegen sind die Anforderungen an die Schnittstelle zum Anwenderprogramm. Sie ist so zu konzipieren, dass für dieses die Benutzung der Kommunikationsfunktionen unabhängig vom Rechnertyp wird. Damit können die Anwendungsprogrammierer auch auf unterschiedlichen Rechnern sich über die Modalitäten des Datenaustausches auf einer Basis verständigen, die für alle gleich ist.

Der Erfindung liegt die Aufgabe zugrunde, ein Verfahren der eingangs beschriebenen Gattung derart weiterzuentwickeln, dass sich Automatisierungsmittel mit unterschiedlichen Strukturen auf der Ebene der Datenein- und ausgabe durch den Anwender möglichst einfach miteinander koppeln lassen.

Das Verfahren soll gleichermassen für sehr leistungsfähige und weniger leistungsfähige Automatisierungsmittel geeignet sein und möglichst zeit- und speicherplatzeffizient arbeiten. Die Leistungsfähigkeit ist durch die Art der Geräte vorgegeben. Beispielsweise kann es sich um programmierbare Steuergeräte oder Prozessrechner handeln.

Die Aufgabe wird erfindungsgemäss dadurch gelöst, dass die Daten, die in dem für die Informationseingabe in das Automatisierungsmittel vorgesehenen Code eingegeben werden, auch dem zwischen Sender und Empfänger verlaufenden Nachrichtenweg zugewiesen sind und dass aus den Daten zum Nachrichtenweg im jeweiligen Automatisierungsmittel vor dem Senden aus einer gespeicherten Steuertabelle, die zu jedem, das Automatisierungsmittel berührenden Nachrichtenweg einen Eintrag enthält, die physikalische Adresse eines nächsten Automatisierungsmittels bestimmt wird, an das die zu übertragenden Nachrichten auf dem Nachrichtenweg zu einem Zielautomatisierungsmittel übergeben werden.

Mit den vorstehend beschriebenen Massnahmen wird im gesamten Kommunikationssystem eine eindeutige Zuordnung zwischen Nachrichtenquelle und Nachrichtensenke geschaffen. Es handelt sich um die Festlegung der Richtung eines logischen Nachrichtenwegs oder um die Herstellung einer virtuellen Verbindung zwischen Nachrichtenquelle und Nachrichtensenke. Der Typ der übertragenen Nachrichten legt die Zusammensetzung, den Umfang und die Form der Daten, die den Inhalt der Nachricht darstellen, fest. Die Zuordnung zwischen Nachrichtensenke und Nachrichtenquelle wird somit durch eine Bezeichnung der Nachricht sichergestellt, die zusammen mit dem Inhalt der Nachricht übertragen wird und mit dem Typ der Nachricht assoziiert ist. Der Sender benötigt daher keine Informationen darüber, wie der Empfänger die gesendeten Daten im einzelnen weiterverwendet, wohin er sie abspeichert, wie oft er sie auswertet. Im Empfänger werden keine Informationen benötigt, auf welche Weise der Sender die Daten generiert oder aus welchen Speicherplätzen er sie entnimmt usw.

Bei Anwendung der oben erläuterten Maßnahmen können Anwender auf verschiedenen Rechnertypen innerhalb des Automatisierungssystems ganz unterschiedliche Verfahren und Systeme zur Programmierung einsetzen. Es ist also nicht mehr erforderlich, daß der Kenner des einen Rechners und des dort verwendeten Programmiersystems über Einzelheiten der Wirkungsweise und des Aufbaus der Programme auf dem anderen Rechner informiert ist und etwa auf solche Einzelheiten bei der Übertragung von Daten Bezug nehmen muß.

Aber auch bei der Kommunikation zwischen Rechnern gleichen Typs, die vom Anwender mit den gleichen Verfahren programmiert werden, ist es nicht mehr notwendig, daß der Sender einer Nachricht für die Ausführung des Kommunikationsvorganges Informationen berücksichtigen muß, die durch die Programmierung auf der Empfängerseite festgelegt sind. Dazu gehört z. B. das Senden von Daten in bestimmte Speicherplätze beim Empfänger.

Im letzteren Falle werden Festlegungen des Programmierers auf der Empfängerseite (Speicherplatzzuteilung) zur Beschreibung des Kommunikationsweges mißbraucht, so daß eine unnötige Vermischung von programmspezifischen und übertragungsspezifischen Informationen vorliegt. Änderungen bei der Programmierung ziehen Änderungen in der Übertragung des Kommunikationspartners nach sich - ein Zustand, der auf keinen Fall erwünscht sein kann. Übertragungsspezifische und programmspezifische Festlegungen werden demnach voneinander getrennt.

Vorzugsweise sind in den zwischen einem Sender und einem Empfänger übertragenen Nachrichten in derjenigen Stelle, die die Daten über den Übertragungsweg enthält, auch Angaben über den Typ der Nachrichten enthalten.

Dabei ist es besonders günstig, daß die Angaben über den Typ der übertragenen Daten nicht explizit, sondern implizit mit den Daten über die Richtung des Übertragungswegs gesendet werden. Die Daten über den Typ der Nachrichten sind zweckmäßigerweise in den Daten der Sendeanweisung enthalten, die die Reihenfolge und die Art der Daten festlegt. Deshalb kann die Zuordnung zwischen Empfangsanweisung und Sendeanweisung auf Anwenderebene unabhängig von der Art der Programmierung der Stationen durch die Nachrichtennummer ausgedrückt werden.

Die Abbildung der zu übertragenden Anwenderdaten wird auf das interne Nachrichtenformat (Sendeseite) bzw. die Abbildung des Nachrichtenformats auf die Anwenderdaten (Empfangsseite) in der dem jeweiligen Anwender geläufigen Notation des von ihm verwendeten Programmierverfahrens formuliert. Wesentlich ist dabei, daß die Reihenfolge der Parameter in der Sendeanweisung auch in der Empfangsanweisung eingehalten wird, d. h. daß der Datentyp beim Senden mit dem Datentyp beim Empfang übereinstimmt.

Der wesentliche Vorteil des Verfahrens ist folgender:

Die Kommunikationsschnittstelle ist eindeutig durch die zwei zusammengehörigen Attribute Nachrichtennummer und Datentyp der Nachricht beschrieben. Diese Beschreibung ist unabhängig von der Art der Programmierung der Station und kann vom jeweiligen Anwender frei auf die ihm geläufigen Elemente seines Programmierverfahrens abgebildet werden.

Vorteilhafterweise ist jedem Nachrichtenweg zwischen einem Sender und einem Empfänger eine Nachrichtennummer zugeordnet. Der Anwender kann dieser Nummer aus Gründen der besseren Lesbarkeit einen Nachrichtennamen zuordnen, der den Konventionen des jeweiligen Anwenders entspricht.

Eine Vorrichtung zur Durchführung des vorstehend beschriebenen Verfahrens besteht erfindungsgemäss darin, dass in jedem Automatisierungsmittel mit der jeweiligen Übertragungsleitung eine Kopplungssteuerung verbunden ist, die über eine Schnittstelle mit einem Bussteuerwerk verbunden ist, das über eine weitere Schnittstelle mit einer übergeordneten Übertragungssteuerung in Verbindung steht, in der eine Steuertabelle gespeichert ist, die für jeden Nachrichtenweg unter Berücksichtigung der Adresse des jeweiligen Automatisierungsmittels eine physikalische Zieladresse eines nächsten Automatisierungsmittels enthält, an das die Nachrichten auf dem Nachrichtenweg zu einem Zielautomatisierungsmittel übergeben werden.

Die Erfindung wird im folgenden an Hand eines in einer Zeichnung dargestellten Ausführungsbeispiels näher erläutert, aus dem sich weitere Merkmale sowie Vorteile ergeben.

Es zeigen

Fig. 1 ein Blockschaltbild eines Automatisierungssystems, dessen Automatisierungsmittel in unterschiedlicher Weise über Übertragungswege miteinander verbunden sind,

Fig. 2 ein Blockschaltbild miteinander verbundener Automatisierungsmittel, in das virtuelle Nachrichtenwege eingetragen sind,

Fig. 3 nähere Einzelheiten von über serielle Busse miteinander verbundenen Automatisierungsmitteln,

Fig. 4 eine Schnittstelle eines Automatisierungssystems.

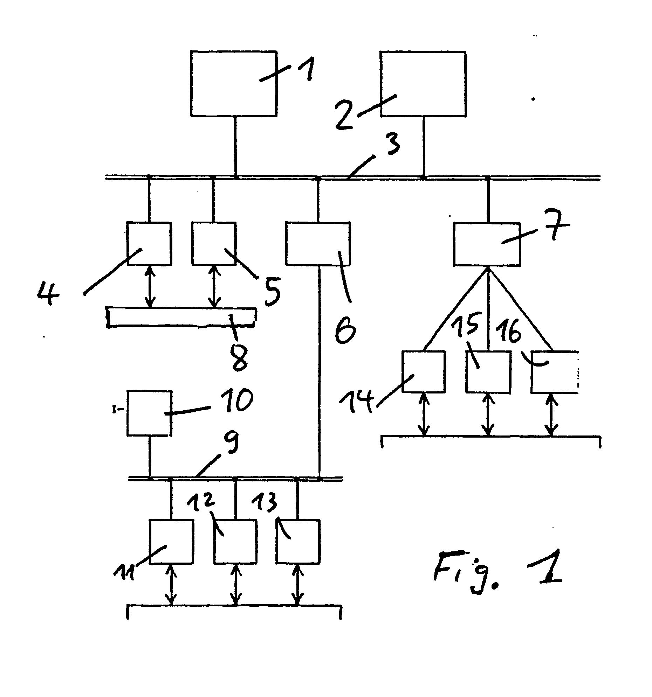

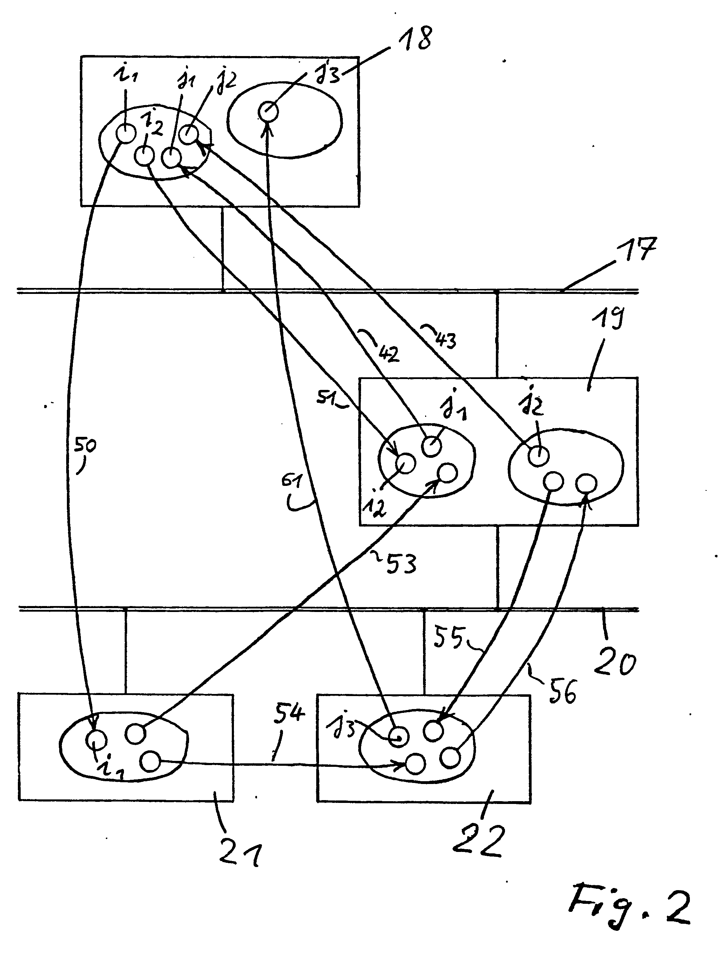

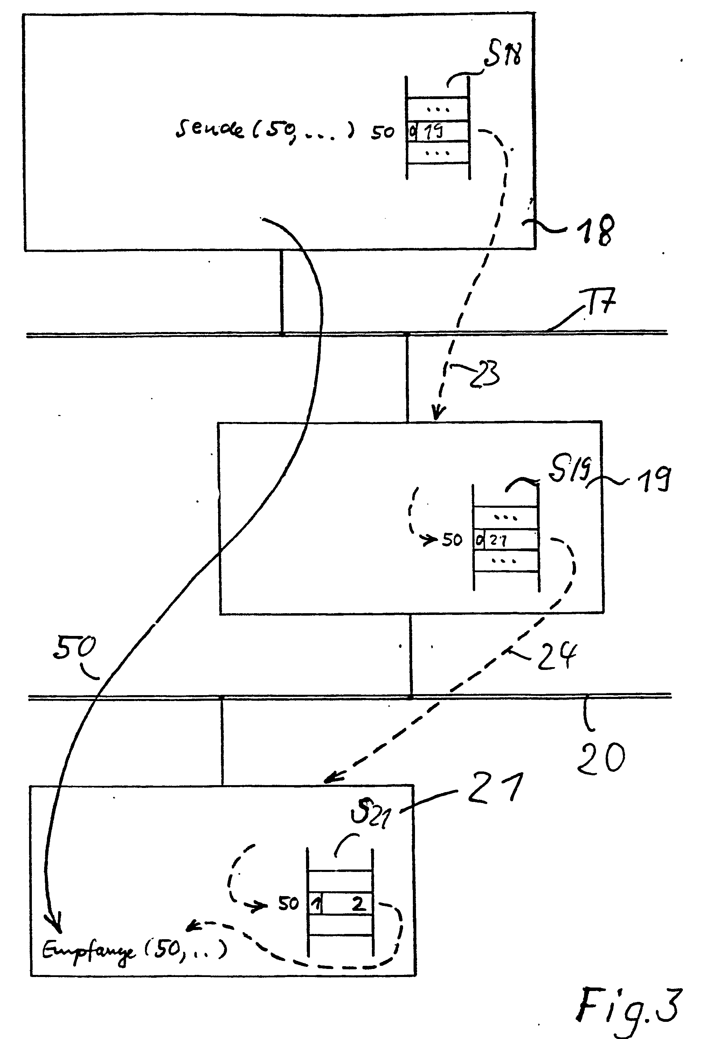

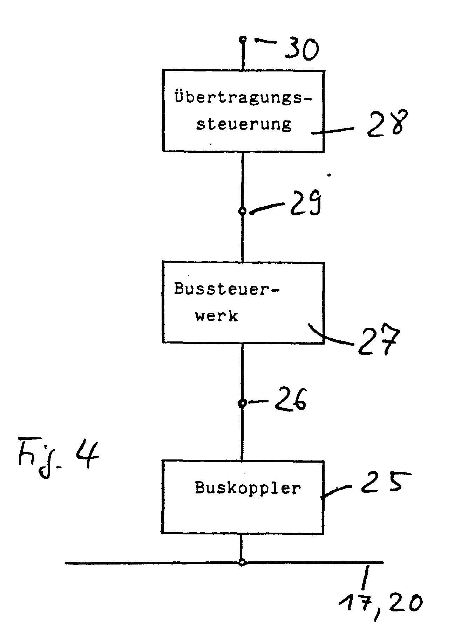

Ein Automatisierungssystem enthält einen Prozessleitrechner 1 und einen Diagnoserechner 2, die jeweils an einen Bus 3 angeschlossen sind. Mit dem Bus 3 stehen auch programmierbare Steuergeräte 4, 5 und Teilprozessrechner 6, 7 in Verbindung. Die programmierbaren Steuergeräte 4, 5 steuern einen Prozess 8. Der Teilprozessrechner 6 ist an einen Bus 9 angeschlossen, mit dem weiterhin eine Bedienungsstation 10 und programmierbare Steuergeräte 11, 12, 13 parallel angeschlossen sind. Der Teilprozessrechner 7 ist sternförmig an programmierbare Steuergeräte 14, 15, 16 angeschlossen. Aus der Figur 1 sind somit einige Varianten der Struktur möglicher Automatisierungssysteme ersichtlich. Bestandteile solcher Automatisierungssysteme sind neben dem Kommunikationsnetzwerk Automatisierungsmittel wie Prozessrechner, programmierbare Steuerungen, intelligente Terminals usw.

Die Automatisierungsmittel 1, 2, 4, 5, 6, 7, 10, 11, 12, 13, 14, 15, 16 führen jeweils Automatisierungsaufgaben aus. Während die programmierbaren Steuergeräte 4, 5, 11, 12, 13, 14, 15, 16 Teilprozesse steuern, üben die Prozeßrechner 1, 6 und 7 Leitfunktionen aus. Zwischen den Automatisierungsmitteln 1, 2, 4, 5, 6, 7 und 10 bis 16 müssen jedoch auch Daten ausgetauscht werden. Es sei angenommen, daß wenigstens einige der in Figur 1 dargestellten Automatisierungsmittel sich hinsichtlich ihrer inneren Struktur unterscheiden. Da die unterschiedlich strukturierten Automatisierungsmittel im Rahmen des Automatisierungssystems zusammenarbeiten müssen, ergeben sich besondere Anforderungen bezüglich des Datenaustausches zwischen den einzelnen Automatisierungsmitteln. Für den Datenaustausch an der Schnittstelle zwischen Leitung und Automatisierungsmittel ist eine besondere Hardware und Software notwendig, die der Struktur des jeweiligen Automatisierungsmittels und der Übertragungsart auf der Leitung angepaßt ist. Die Anforderungen an die Schnittstelle zum Anwenderprogramm sind demgegenüber verschieden. Die einzelnen Automatisierungsmittel stellen Kommunikationsfunktionen für den Datenaustausch mit anderen Automatisierungsmittel zur Verfügung. Die Kommunikationsfunktion besteht jeweils in Sende- und Empfangsanweisungen. Um die Kommunikationsfunktionen unabhängig von der inneren Struktur des Automatisierungsmittels zu machen, wird das Übertragungsverfahren für den Datenaustausch zwischen den einzelnen Automatisierungsmitteln in der nachstehend beschriebenen Weise verändert. Hierzu wird auf die Figur 2 Bezug genommen.

An einen Bus 17 sind zwei Automatisierungsmittel 18, 19 angeschlossen. Das Automatisierungsmittel 19 ist weiterhin mit einem zweiten Bus 20 verbunden, an den zwei weitere Automatisierungsmittel 21, 22 angeschlossen sind. Zwischen den Automatisierungsmitteln 18, 19, 21 und 22 sollen Nachrichten ausgetauscht werden. Die Modalitäten des Datenaustauschs sollen für alle Automatisierungsmittel 18, 19, 21, 22 unabhängig von ihrem speziellen Aufbau sein. Dies wird erreicht, indem bei allen übertragenen Nachrichten an einer Stelle in der Reihenfolge der übertragenen Nachrichten Daten eingefügt werden, die einerseits nur den zwischen dem jeweiligen Sender und dem Empfänger verlaufenden Übertragungsweg und andererseits den Typ der Nachrichten angeben. Diese Daten werden im jeweils für den Sender bestimmten Code eingegeben. Vom Sender werden die Daten in den für den Übertragungsweg vorgesehenen Code umgewandelt. Der Empfänger setzt den Code des Übertragungswegs wieder in den für ihn vorgesehenen Code um. Mit dem Code wird zunächst also die Richtung einer Nachrichtenverbindung festgelegt. Für Nachrichtenübertragungen zwischen den verschiedenen Automatisierungsmitteln 18, 19, 21, 22 sind auf der Anwenderprogrammierungsebene in einer höheren Programmiersprache Sende- und Empfangsanweisungen vorgesehen. Diese Sende- und Empfangsanweisungen werden bei allen Automatisierungsmitteln 18, 19, 21, 22 mit dem Code für den Nachrichtenweg versehen. Der Code für den Nachrichtenweg ist vorzugsweise ein Name oder eine Nummer. In dem Automatisierungsmittel 18 sind beispielsweise die mit $i_1$ und $i_2$ bezeichneten Sendeaufträge für die Übertragung von Nachrichten zu den Automatisierungsmitteln 19 und 21 vorhanden. Die Nachrichtenwege zwischen dem Automatisierungsmittel 18 und dem Automatisierungsmitteln 19 und 21 sind jeweils durch Pfeile dargestellt und mit 51 und 50 bezeichnet. In diesem Falle arbeitet das Automatisierungsmittel 18 als Sender. Weiterhin sind in dem Automatisierungsmittel 18 Empfangsaufträge $j_1$ und $j_2$ für

Nachrichten vorhanden, die von dem Automatisierungsmittel 19 gesendet werden. Die Nachrichtenwege zwischen dem Automatisierungsmittel 19 und dem Automatisierungsmittel 18 als Empfänger sind in Figur 2 durch Pfeile dargestellt, die jeweils mit 42 und 43 bezeichnet sind. Den Sendeaufträgen $i_1$ und $i_2$ entsprechen Empfangsaufträge $i_1$ und $i_2$ jeweils im Automatisierungsmittel 21 und 19. Den Empfangsaufträgen $j_1$ und $j_2$ im Automatisierungsmittel 18 entsprechen Sendeaufträge $j_1$ und $j_2$ im Automatisierungsmittel 19. Im Automatisierungsmittel 18 ist ein weiterer Empfangsauftrag $j_3$ für Nachrichten aus dem Automatisierungsmittel 22 vorgesehen, in dem ein entsprechender Sendeauftrag $j_3$ vorhanden ist. Der Nachrichtenweg mit dem Automatisierungsmittel 22 als Sender und dem Automatisierungsmittel 18 als Empfänger ist durch einen Pfeil dargestellt, der mit 61 bezeichnet ist. Weitere Nachrichtenwege mit dem Automatisierungsmittel 21 als Sender und den Automatisierungsmitteln 19 und 22 als Empfänger sind durch Pfeile dargestellt und mit 53, 54 bezeichnet. Die entsprechenden Sende- und Empfangsaufträge sind nicht bezeichnet. Die Nachrichtenwege zwischen den Automatisierungsmitteln 19 und 22 jeweils als Sender oder Empfänger sind durch Pfeile 55, 56 dargestellt, während die entsprechenden Sende- und Empfangsaufträge nicht näher bezeichnet sind.

Die Nachrichtenwege 42, 43, 50, 51, 53 bis 56 und 61 stellen jeweils virtuelle Verbindungen zwischen den Sendeorten und den Empfangsorten dar. Die Informationen über die Nachrichtenwege werden zusammen mit den Nachrichten übertragen und dienen zur Identifikation der jeweiligen Nachricht im gesamten Automatisierungssystem.

Die Eindeutigkeit der Bezeichnung einer Nachricht ist nur für das Übertragungssystem selbst erforderlich. Auf Anwenderebene ist für jedes Automatisierungsmittel eine freie Wahl von stationsintern eindeutigen Nachrichtennamen möglich, die vom Übertragungssystem in die zugeordnete systemweit eindeutige Bezeichnung umgesetzt werden.

Außer durch seine Nachrichtennummer wird ein gerichteter Nachrichtenweg durch den Typ der zu übertragenden Daten, d. h. ihre Art (z. B. Bit, Wort, Feld) Anzahl (Feldelemente), Länge (Byte, Doppelwort) oder Zusammensetzung (Block aus Daten verschiedenen Typs) gekennzeichnet. Der Datentyp einer Nachricht ist mit der Nachrichtennummer assoziiert; er muß deshalb für den Absendeort und den Empfangsort einer Nachricht identisch sein.

Wichtig ist, daß der Typ einer Nachricht nicht explizit mitübertragen werden muß, sondern daß er durch die Sende- bzw. Empfangsanweisung im Anwenderprogramm festgelegt wird. Dies soll am Beispiel der Übertragung eines bestimmten Bits und eines bestimmten Wortes aus dem Datenbereich des Anwenderprogramms auf einer Station in den Datenbereich des Anwenderprogramms auf einer anderen Station kurz erläutert werden.

Die Übertragung erfolgt über den gerichteten Nachrichtenweg mit der Nachrichtennummer 50. Auf der Sendeseite ist - natürlich abhängig von u. U. zusätzlichen Bedingungen - das Bit Nr. 7 und das Wort Nr. 18 aus dem Signalspeicher eines Steuergerätes zu übertragen. Die zugehörige Sendeanweisung hat in der Fachsprache DOLOG dann die Form.

- Sendeoperation     SENDE
- Nachrichtennummer     WEG 50
- Angabe von Typ     BIT 7
- Herkunft der Daten     WORT 18

Auf der Empfangsseite sollen die auf dem Nachrichtenweg 50 ankommenden Daten in den Variablen

meldebit:     boolean;
zählerstand:     integer;

in einem Pascal-Programm abgelegt werden. Dazu gibt der Anwender folgende Empfangsanweisung:

empfange  (50     meldebit,
    zählerstand)

| Empfangs-operation | Nach-richten-nummer | Beschreibung von Typ (s.o.) und Zieladressen d. Daten |
|---|---|---|

Auf Einzelheiten der Wirkung des Sendens und Empfangens wird weiter unten noch eingegangen; hier soll nur aufgezeigt werden, daß

- die Zuordnung zwischen Empfangsanweisung und Sendeanweisung auf Anwenderebene unabhängig von der Art der Programmierung der Automatisierungsmittel durch die Nachrichtennummer ausgedrückt wird und daß
- die Abbildung der zu übertragenden Anwenderdaten auf das interne Nachrichtenformat (Sendeseite) bzw. die Abbildung des Nachrichtenformats auf die Anwenderdaten (Empfangsseite) in der dem jeweiligen Anwender geläufigen Notation des von ihm verwendeten Programmierverfahrens formuliert wird. Wesentlich dabei ist nur, daß die Reihenfolge der Parameter in der Sendeanweisung (im Beispiel zuerst Bit, dann Wort) auch in der Empfangsanweisung eingehalten wird, d. h. daß der Datentyp beim Senden mit dem Datentyp beim Empfang übereinstimmt.

Die Kommunikationsschnittstelle ist also eindeutig durch die zwei zusammengehörigen Attribute Nachrichtennummer und Datentyp der Nachricht gekennzeichnet. Diese Kennzeichnung ist unabhängig von der Art der Programmierung des Automatisierungsmittels und kann vom jeweiligen Anwender frei auf die ihm geläufigen Elemente seines Programmierverfahrens abgebildet werden.

Für eine sinnvolle Verwendung ist natürlich vorauszusetzen, daß sich die Anwender auf beiden Automatisierungsmitteln (die u. U. auch in einer Person vereint sein können) über die Bedeutung und den Typ der Daten, die über einen bestimmten Nachrichtenweg gesendet werden, einig sind. Eine solche gegenseitige Abstimmung ist grundsätzlich notwendig, wenn mehrere Partner gemeinsam, aber relativ unabhängig voneinander, an der Lösung einer Aufgabe arbeiten. Wichtig ist nur, daß die Schnittstelle, über die sie Informationen austauschen, für alle im Prinzip gleich aussieht.

Jeder Prozeß kann Quellen und Senken für mehrere gerichtete Nachrichtenwege enthalten. Bei der Benutzung der logischen Nachrichtenwege muß nicht berücksichtigt werden, ob im Ablauf der Übertragung ein Durchreichen über eine Zwischenstation erfolgt; diese Leistung erbringt das Übertragungssystem. Auch spielt es keine Rolle, ob eine Station Master oder Slave am Bus ist; die Nachrichtenübertragung im System wird damit für den Anwender auf logischer Ebene vollkommen transparent.

Die Sendeanweisung stellt den Anfangspunkt eines gerichteten Nachrichtenweges dar. Obwohl sie bei den unterschiedlichen Programmierverfahren formal verschieden aussehen kann, enthält sie grundsätzlich in allen Fällen die gleichen Parameter, nämlich

- die Angabe der Nachrichtennummer bzw. die des Nachrichtennamens und
- eine Liste der zu übertragenden Daten mit einer Angabe der Datentypen oder aber der Bezüge auf diese Datentypen.

Aus den Anforderungen der Realzeitverarbeitung resultiert die Notwendigkeit weiterer Parameter, wie z. B.

- Angaben über besondere Ausführungsmodi (z. B. Warten auf Quittung oder nicht),
- Angaben über Zeitpunkte oder Zeitschranken (z. B. Gültigkeitsdauer von Nachrichten) und
- Angaben für die Ablage von Statusmeldungen (z. B. Quittierungen, Fehlerzustände).

Die Ausführung einer Sende-Anweisung hat die Wirkung, daß die zu sendenden Daten in einen internen Puffer des Übertragungssystems übernommen werden und von dort an die zugeordnete Empfangsanweisung des gerichteten Nachrichtenweges weitergeleitet werden. Die Ausführung der Sendeanweisung ist abgeschlossen, sobald die Daten in den internen Puffer übernommen sind; ist der Sendepuffer des Übertragungssystems gerade gefüllt, kommt es zu einer Verzögerung des aufrufenden Prozesses solange, bis wieder Pufferplatz zur Verfügung steht.

Wenn der sendende Prozeß ein zyklisch ablaufendes Programm darstellt, das nicht angehalten werden darf, da ein Abtastintervall eingehalten werden muß, ist die Verzögerung des Senders über einen Quittungsparameter zu realisieren. Bei vollem Sendepuffer stellt der Sendebaustein eine leere Anweisung dar. Erst bei Übernahme der Daten in den internen Puffer wird ein Quittungsbit gesetzt, das dem rufenden Prozeß die Ausführung der Sendeanweisung anzeigt. Der rufende Prozeß muß dieses Quittungsbit zurücksetzen.

Nach Verlassen der Sendeanweisung bzw. nachdem das Quittungsbit vom Übertragungssystem gesetzt wurde, kann im Sender das sendende Programm über die gesendeten Daten wieder frei verfügen.

Der beschriebene Ablauf einer Sendeanweisung umfaßt keine Rückmeldung über eine erfolgreich durchgeführte Nachrichtenübertragung zur Zielstation. Eine Kontrolle auf einwandfreie Übertragung ist in diesem Fall nur über eine Anwenderquittung möglich, die über einen gesonderten logischen Nachrichtenweg zurückgesendet wird. Eine solche Quittung hat den Vorteil, eine Bestätigung dafür zu liefern, daß der Datenaustausch zwischen den Prozessen selbst erfolgreich abgeschlossen ist (und nicht nur innerhalb des Bus- oder Übertragungssystems).

Alternativ dazu ist eine Variante der Sendeanweisung denkbar, bei der der aufrufende Prozeß so lange verzögert wird, bis das Übertragungssystem (nicht der empfangende Prozeß) der Zielstation die Annahme der Nachricht zurückgemeldet hat. Als Rückmeldung kann u. U. die Leitungsquittung des physikalischen Übertragungssystems ausreichen.

Ein solches Verfahren umgeht alle diejenigen z. T. schwerwiegenden Probleme, die im Zusammenhang mit der Pufferverwaltung auf Sender- und Empfängerseite und der Konsistenz der zu sendenden Daten auftreten, da der aufrufende Prozeß diese Daten erst dann wieder verändern kann, wenn die Übertragung gesichert ist.

Der Endpunkt eines gerichteten Nachrichtenweges wird durch die Empfangsanweisung bestimmt. Sie enthält als Parameter

- die Angabe der Nachrichtennummer oder des Nachrichtennamens und
- eine Liste der Zielorte (Adressen, Variablenamen) der zu empfangenden Daten mit den Angaben der zugeordneten Datentypen oder der Bezüge auf diese (wie bei der Sendeanweisung).

Wichtig ist, daß die Datentypen einer Empfangsanweisung für einen gerichteten Nachrichtenweg auch in ihrer Reihenfolge mit denen der Sendeanweisung für diesen Nachrichtenweg übereinstimmen, um die richtige Abbildung von der Sende- auf die Empfangsseite zu gewährleisten.

Die Ausführung einer Empfangsanweisung hat die Wirkung, daß, wenn auf dem angegebenen Nachrichtenweg mindestens eine Nachricht abgesandt wurde, diese empfangen und damit an die als Parameter angegebenen Plätze übernommen wird; andernfalls, d. h. wenn zum Zeitpunkt der Ausführung der Empfangsanweisung keine Nachricht vorliegt, wird der aufrufende Prozeß verzögert, bis eine Nachricht über den betreffenden Nachrichtenweg eintrifft.

Die beschriebene Wirkungsweise der Empfangsanweisung stellt sicher, daß nach Rückerhalt der Kontrolle der aufrufende Prozeß eine übertragene Nachricht vorfindet und mit den angeforderten Daten weiterarbeiten kann.

Bei zyklischer Arbeitsweise, bei der eine bestimmte Zykluszeit eingehalten werden muß, wird eine Verzögerung des rufenden Prozesses dadurch vermieden, daß die Empfangsanweisung bei leerem Empfangspuffer des Nachrichtenweges - ähnlich wie die Sendeanweisung bei vollem Sendepuffer - in jedem Zyklus als leere Anweisung ausgeführt wird. Ein besonderer Parameter der Empfangsanweisung (Empfangsbit) wird gesetzt, wenn eine Nachricht über den angegebenen Nachrichtenweg eingetroffen ist und die Daten an die vom Anwender vorgegebenen Plätze übernommen sind.

Je nach Anwendungsfall können abhängig oder unabhängig vom Setzen des Empfangsbits die betroffenen Daten weiterverarbeitet werden; ein Rücksetzen ist nur notwendig, wenn das Empfangsbit explizit abgefragt wird, um das Eintreffen einer bestimmten Nachricht zu erkennen.

Grundsätzlich wird die Empfangsanweisung bei einer taskorientierten Arbeitsweise in etwas anderer Weise verwendet als bei einer zyklischen Arbeitsweise. Während ein Prozeß (task) - als einer von mehreren parallelen Prozessen - i. a. nur eine Empfangsanweisung enthält, dort auf eine Nachricht wartet und bei Eintreffen der Nachricht entsprechende Aktionen auslöst, durchläuft ein zyklisches Programm - als der einzige aktive Prozeß - alle vorhandenen Empfangsanweisungen, wobei dies höchstens noch von zusätzlichen Bedingungen abhängig gemacht werden kann. Die Reaktion auf eine eintreffene Nachricht wird z. B. über das jeweilige Empfangsbit ausgelöst; sie kann sich aber auch aufgrund des Inhalts der übertragenen Nachricht selbst ergeben.

In den einzelnen Automatisierungsmitteln 18, 19, 21, 22 werden die Nachrichten mittels eines Übertragungssystems an den richtigen physikalischen und logischen Empfangsort weitergeleitet. Dem Übertragungssystem stehen hierfür Steuertabellen zur Verfügung, die in Speichern der Automatisierungsmittel 18, 19, 21, 22 abgelegt sind.

Grundlage für die Identifikation einer Nachricht - und damit eines Nachrichtenweges - im System ist ihre systemweit eindeutige Nachrichtennummer, die in der Nachricht mitübertragen wird. Aus der Nachrichtennummer kann das Übertragungssystem eines Automatisierungsmittels immer das nächste physikalische Ziel für eine Nachricht bestimmen und damit das zugehörige Adreß-Byte im Telegramm entsprechend setzen. Benutzt wird eine sogenannte Steuertabelle, die zu jeder systemweit eindeutigen Nachrichtennummer einen Eintrag enthält, der für dieses Automatisierungsmittel angibt, an welche physikalische Zieladresse die Nachricht weiterzugeben ist.

Für den Nachrichtenweg 50 im Beispiel des Systems in Figur 3 enthält z. B. die Steuertabelle S18 zum Automatisierungsmittel 18 beim Index 50 den Eintrag 19, d. h. die physikalische Adresse der durchreichenden Station 19, während die Steuertabelle S19 dieser Station beim gleichen Index den Eintrag 21, d. h. die physikalische Adresse der Zielstation 21 liefert. Damit wird das Weiterleiten von Nachrichten für das Übertragungssystem transparent, d. h. vollkommen unabhängig davon, ob eine Station selbst Master oder Slave am Bus ist oder Nachrichten durchreichen muß.

Die Nachricht über den Weg 50 wird also zunächst über den Bus 17 zum Automatisierungsmittel 19 übertragen. Dieser Weg ist in Figur 3 mit 23 bezeichnet. Das Automatisierungsmittel 19 leitet die Nachricht weiter über den Bus 20 zum Automatisierungsmittel 21. Dies ist in Figur 3 mit einem Pfeil 24 gekennzeichnet. Im Automatisierungsmittel 21 ist eine Steuertabelle S21 vorhanden.

Da auf diesem Automatisierungsmittel die Senke für den Nachrichtenweg 50 angeordnet ist, ist der entsprechende Eintrag in der Steuertabelle S21 ein Verweis auf die zugehörige Empfangsanweisung.

Ein einzelnes Automatisierungsmittel wird im allgemeinen nur von einem kleinen Teil der Gesamtzahl der im System vorhandenen Nachrichtenwege berührt. Deshalb ist es zweckmäßig, die Steuertabellen als Hash-Tabellen anzulegen, um Speicherplatz zu sparen.

Der genaue Aufbau der Steuertabellen hängt auch von den speziellen Anforderungen des jeweiligen Automatisierungsmittels ab.

Bei allen Automatisierungsmitteln 18, 19, 21, 22 haben die Kommunikationssysteme vorzugsweise gleichartige Schnittstellen, die aus Figur 4 ersichtlich sind.

An den Bus 17 bzw. 20 ist eine Buskopplungssteuerung 25 angeschlossen, die den Datenaustausch über den jeweiligen Bus ermöglicht. Durch die Buskopplung wird weiterhin jede Nachricht gegenüber anderen Nachrichten durch Markierung von Anfang und Ende abgegrenzt. Weiterhin können durch die Buskopplung die Nachrichten gegen Übertragungsfehler gesichert bzw. auf solche Fehler hin geprüft werden. Unter Umständen führt die Buskopplungssteuerung Umcodierungen und/oder Modulationen bzw. Demodulationen aus. Die Buskopplungssteuerung ist über eine Schnittstelle 26 mit einem Bussteuerwerk 27 verbunden. Das Bussteuerwerk erkennt Nachrichten, die an das eigene Automatisierungssystem oder an andere Automatisierungssysteme gerichtet sind und leitet diese zur Übertragungssteuerung 28 über eine Schnittstelle 29 weiter.

Die Aufgaben der Übertragungssteuerung lassen sich in die beiden Bereiche "Auftragsvermittlung" und "Transportabwicklung" unterteilen. Die Auftragsvermittlung sorgt in Senderichtung für die Bereitstellung von Sendepufferplatz und die Übernahme der Anwenderdaten, ihrem Format entsprechend, in den angeforderten Pufferplatz. In Empfangsrichtung übernimmt sie die Verteilung der im Empfangspuffer eingetroffenen Nachrichten auf die entsprechenden Nachrichtenwege und die Übergabe der Daten ans Anwenderprogramm mit anschließender Freigabe des Pufferplatzes. Die Leistung der Auftragsvermittlung ist entsprechend der Art der Anwenderprogrammierung - taskorientiert oder zyklisch - je nach Rechnertyp unterschiedlich auszulegen.

Die Transportabwicklung baut in Senderichtung das sendefähige Telegramm auf, wobei sie insbesondere die Aufgabe der Wegeleitung wahrnimmt, indem sie an Hand der Nachrichtennummer über die Steuertabelle das nächste physikalische Automatisierungsmittel bestimmt. Außerdem überwacht sie Quittungen und Fehler, sorgt für entsprechende Rückmeldungen an die Auftragsvermittlung und gibt nicht mehr benötigten Sendepufferplatz frei. In Empfangsrichtung prüft sie ebenfalls mit Hilfe der Steuertabelle, ob eine Nachricht ihr Zielautomatisierungssystem erreicht hat; diese wird dann an die eigene Auftragsvermittlung weitergeleitet. Andernfalls, d. h. wenn eine Nachricht durchgereicht werden muß, setzt sie die neue physikalische Adresse im entsprechenden Byte des Telegramms ein und kennzeichnet das Telegramm als sendefähig.

Das Bussteuerwerk realisiert, zum einen gesteuert über die übertragungsbezogene Schnittstelle, zum anderen über den angeschlossenen Buskoppler, alle zum Betrieb des seriellen Busses notwendigen Prozeduren. Insbesondere verbirgt es die Master- oder Slave-Eigenschaften einer Station gegenüber der Schicht der Übertragungssteuerung.

Die Übertragungssteuerung 28 hat neben der Schnittstelle 29 eine Schnittstelle 30 zum Anwendungsprogramm. Sowohl die Schnittstelle 30 zum Anwender bzw. Systemprogrammierer als auch die übertragungsbezogene Schnittstelle 29 zum Bussteuerwerk können vorteilhafterweise jeweils durch eine wohldefinierte Menge von wenigen, einfachen Operationen mit entsprechender Parametrierung vollständig beschrieben sein. Der Zugriff auf die Leistungen der unterhalb der jeweiligen Schnittstelle liegenden Ebene ist dann in eindeutiger Weise ausschließlich über die festgelegten Operationen möglich.

Solche Operationen stellen z. B. für die Schnittstelle 30 die oben beschriebene Sendeanweisung bzw. Empfangsanweisung für einen logischen Nachrichtenweg dar. Die Parameter dieser Anweisungen umfassen nur anwenderbezogene Daten und Steuerinformationen und haben keinerlei Bezug zu Struktur und Ablauf der Übertragungsvorgänge in den darunterliegenden Schichten; damit erfordert die Benutzung der Schnittstelle 30 auch keine Kenntnis der entsprechenden Einzelheiten wie z. B. Master-/Slave-Verhalten, Telegrammaufbau, Typ der seriellen Verbindung (Bus/Stern), physikalische Stationsadressen usw. Weitere Operationen der Schnittstelle 30 können z. B. Normierkommandos, Anweisungen zum Sperren oder Freigeben von logischen Nachrichtenwegen, Zeitvorgabe für logische Nachrichtenwege o. ä. sein. Diese Operationen sind Hilfsmittel, die weniger vom Anwender, als vielmehr von der Grundsoftware aus in Anspruch genommen werden.

Die übertragungsbezogene Schnittstelle 29 ist im wesentlichen durch zwei Operationen gekennzeichnet, nämlich durch den Schreibauftrag und den Leseauftrag an das Bussteuerwerk 27.

Als Parameter tritt hier das weitgehend aufbereitete Telegramm auf, das neben der Nachrichtennummer und den entsprechend gepackten Anwenderdaten z. B. in Senderichtung die physikalische Adresse der nächsten Station und die Blocklänge enthält. Auch an der Schnittstelle 29 können Eigenschaften wie z. B. Master-/Slave-Verhalten oder Bus-/Stern-Verbindung verborgen bleiben. Sie werden erst innerhalb des Bussteuerwerkes 27 berücksichtigt, das für die Bedienung der Schnittstelle 26 verantwortlich ist. Es muß dazu noch gewisse kleinere Änderungen im Telegramm vornehmen, die es aber alle aus der physikalischen Automatisierungsmitteladresse ableiten kann. Weitere Operationen der übertragungsbezogenen Schnittstelle 29 betreffen z. B. die Normierung des Bussteuerwerkes 27, die Auslösung eines Mastertransfers, die Beeinflussung eines Pollvorganges o. ä. Sie werden nicht von der Übertragungssteuerung, sondern von entsprechenden anderen Teilen der Grundsoftware benutzt.

In den Automatisierungsmitteln 1, 2, 4, 5, 6, 7, 11 bis 16 und 18 bis 22 sind, soweit sie als Sender verwendet werden, Sendetabellen gespeichert. In den Sendetabellen sind die Nachrichtenwege im Übertragungssystem gespeichert, die für die Datenübertragung zwischen den Anwenderprogrammen benötigt werden. Die Sendetabellen werden aus Nachrichtentabellen erstellt, die folgende Daten enthalten.

Zu jedem Nachrichtenweg enthalten sie

- die Nachrichtennummer,
- die Beschreibung des physikalischen Weges der Nachricht,
- die Beschreibung des Datentyps einer Nachricht und
- einen Textkommentar, mit dem die technologische Bedeutung der Nachricht dokumentiert werden kann.

Der physikalische Weg einer Nachricht ist durch Angabe der Folge der Anschlußnummern, die von der Nachricht berührt werden, festgelegt. Die Beschreibung des Datentyps der Nachricht gibt an, wieviel aufeinanderfolgende Bits (Typ B1), Bytes (Typ B8), Worte (Typ B16) oder Doppelworte (Typ B32) in der Nachricht übertragen werden. Prinzipiell können die aufgeführten Datentypen in einer Nachricht in beliebiger Reihenfolge auftreten. Da aber Bits in Bytes gepackt werden müssen und alle anderen Datentypen immer an Bytegrenzen beginnen, ist darauf zu achten, daß mehrere Einzelbits möglichst zusammengefaßt werden und nicht zwischen den anderen Datentypen eingestreut werden.

Der Textkommentar in der Nachrichtenliste dient nur Dokumentationszwecken. Er stellt den notwendigen Informationsaustausch zwischen mehreren an einer Projektierung Beteiligten sicher, indem er die (technologische) Bedeutung der über einen Nachrichtenweg übertragenen Daten beschreibt. Die Kommentarlänge orientiert sich an den Gegebenheiten des jeweiligen Programmiergerätes; für ein gegebenes Programmiergerät liegt sie fest. Eine sinnvolle Verwendung von Kommentaren ist nur dann möglich, wenn genügend Platz zur Abspeicherung der Zeichenketten vorhanden ist, z. B. auf externem Massenspeicher. Da der Text im Kommentar frei gewählt werden kann, können im speziellen Fall auch direkt technologische Bezeichnungen, Signalnamen, Pin-Anschlüsse o. ä. angegeben werden.

Die Sendetabellen für den jeweiligen Nachrichtenweg enthalten eine Sendeanweisung mit der Nachrichtennummer, der Anzahl der Parameterblöcke und der Gesamtzahl der Datenbytes. Die Parameterblöcke geben den Typ (Byte), die Anzahl (Byte) und die Anfangsadresse im Signalspeicher, Quittierungsinformation und ein Sperrbit an.

In einem zusätzlichen Tabellenteil sind Systemmerker für jede Nachrichtennummer vorhanden, die sich auf die Auslösung des Sendevorgangs beziehen. In den Automatisierungsmitteln sind ferner Empfangstabellen vorhanden, die für die Übertragung der Daten aus den in Form von Telegrammen ankommenden Nachrichten in den Signalspeicher dienen.

Ihr Aufbau entspricht dem der Sendetabellen (d. h. je eine Empfangsanweisung pro Nachrichtenweg), wobei aber die Kopfinformation einer Empfangsanweisung nur noch aus der Anzahl der Parameterblöcke besteht und die SB-Tabelle keine direkte Entsprechung hat.

Während Sendetabelle und Empfangstabelle die notwendigen Informationen zur Schnittstelle zwischen Anwenderprogramm und Übertragungssystem zur Verfügung stellen, liefert die Steuertabelle die zentralen Leitinformationen für alle das jeweilige Automatisierungsmittel berührenden Nachrichtenwege. Sie enthält für jede auf dem Automatisierungsmittel abzusendende oder ankommende Nachricht mit gegebener Nachrichtennummer entweder

- die Beschreibung des nächsten physikalischen Ziels für eine Nachricht (Kommunikationsprozessor und serielle Schnittstelle auf dem eigenen Automatisierungsmittel, physikalische Adresse des Ziels oder

- die Beschreibung der logischen Empfangsstelle (zur Nachrichtennummer gehörige Empfangsanweisung) des eigenen Automatisierungsmittels.

Die Steuertabelle wird aus den Informationen der Konfigurations-, der Nachrichten- und der Empfangstabelle speziell für das jeweilige Automatisierungsmittel erzeugt. Die Steuertabellen verschiedener Automatisierungsmittel enthalten für die gleiche Nachrichtennummer immer unterschiedliche Einträge.

Die Nachrichtennummern auf einem Automatisierungsmittel treten stark verteilt auf, da i. a. ein Automatisierungsmittel von sehr viel weniger Nachrichtenwegen berührt wird, als insgesamt im System vorhanden sind. Um einen effizienten Zugriff bei minimalem Speicherplatzbedarf zu gewährleisten, muß deshalb die Steuertabelle in besonderer Weise organisiert werden.

Eine geeignete Organisation ergibt sich, wenn die Steuertabelle als Hash-Tabelle mit der Nachrichtennummer als Schlüssel realisiert wird.

## Patentansprüche

1. Verfahren zur Übertragung von Nachrichten zwischen Automatisierungsmitteln (1, 2, 4, 5, 6, 7, 11 bis 16, 18, 19, 21, 22), die jeweils gleiche oder unterschiedliche innere Strukturen aufweisen und die als Teile eines Automatisierungssystems unmittelbar oder unter Zwischenschaltung eines oder mehrerer Automatisierungsmittel wahlweise jeweils als Sender oder Empfänger über einen Nachrichtenweg (42, 43, 50, 51, 53 bis 56, 61) miteinander in Verbindung stehen, wobei zur Auswahl eines Empfängers für eine Nachrichtenübertragung im jeweiligen Automatisierungsmittel (1, 2, 4, 5, 6, 7, 11 bis 16, 18, 19, 21, 22) Daten über den Typ der zu übertragenden Nachrichten eingegeben werden, die an einer vorab festgelegten Stelle in die zu übertragenden Nachrichten eingefügt und vom Sender in den für die Übertragungsleitungen (3, 9, 17, 20) vorgesehenen Code beim Senden umgewandelt sowie am Ende des Nachrichtenwegs (42, 43, 50, 51, 53 bis 56, 61 vom Empfänger in dessen für die Informationseingabe vorgesehenen Code umgewandelt werden,

dadurch gekennzeichnet,

dass die Daten, die in den für die Informationseingabe in das Automatisierungsmittel vorgesehenen Code eingegeben werden, auch dem zwischen Sender und Empfänger verlaufenden Nachrichtenweg (42, 43, 50, 51, 53 bis 56, 61) zugewiesen sind und dass aus den Daten zum Nachrichtenweg im jeweiligen Automatisierungsmittel vor dem Senden aus einer gespeicherten Steuertabelle, die zu jedem, das Automatisierungsmittel berührenden Nachrichtenweg einen Eintrag enthält, die physikalische Adresse eines nächsten Automatisierungsmittels bestimmt wird, an das die zu übertragenden Nachrichten auf dem Nachrichtenweg zu einem Zielautomatisierungsmittel übergeben werden.

2. Verfahren nach Anspruch 1,
dadurch gekennzeichnet,
daß in den zwischen einem Sender und einem Empfänger übertragenen Nachrichten in derjenigen Stelle, die die Daten über den Übertragungsweg (42, 43, 50, 51, 53 - 56, 61) enthält, auch Angaben über den Typ der Nachrichten enthalten sind.

3. Verfahren nach Anspruch 1,
dadurch gekennzeichnet,
daß die Daten über den Typ der übertragenen Nachrichten in dem Code für die Sendeanweisung enthalten sind, der auch die Art der Daten und deren Reihenfolge festlegt.

4. Verfahren nach Anspruch 1 oder einem der folgenden Ansprüche,
dadurch gekennzeichnet,
daß jedem Nachrichtenweg (42, 43, 50, 51, 53 bis 56, 61) zwischen einem Sender und einem Empfänger eine Nummer zugeordnet ist.

5. Verfahren nach Anspruch 4,
dadurch gekennzeichnet,
daß jeder Nummer eines Nachrichtenwegs (42, 43, 50, 51, 53 bis 56, 61) in dem jeweiligen Automatisierungsmittel ein frei wählbarer Name zugeordnet wird.

6. Vorrichtung zur Durchführung des Verfahrens nach einem der Ansprüche 1 bis 5,
dadurch gekennzeichnet,
dass in jedem Automatisierungsmittel (1, 2, 4, 5, 6, 7, 11 bis 16, 18, 19, 21, 22) mit der jeweiligen Übertragungsleitung (3, 9, 17, 20) eine Kopplungssteuerung (25) verbunden ist, die über eine Schnittstelle (26) mit einem Bussteuerwerk (27) verbunden ist, das über eine weitere Schnittstelle (29) mit einer übergeordneten Übertragungssteuerung (28) in Verbindung steht, in der eine Steuertabelle (S 18, S 19, S 21) gespeichert ist, die für jeden das Automatisierungsmittel berührenden Nachrichtenweg unter Berücksichtigung der Adresse des jeweiligen Automatisierungsmittels eine physikalische Zieladresse eines nächsten Automatisierungsmittels enthält, an das die Nachrichten auf dem Nachrichtenweg zu einem Zielautomatisierungsmittel übergeben werden.

7. Vorrichtung nach Anspruch 6,
dadurch gekennzeichnet,
daß in mindestens einem Automatisierungsmittel (1, 2, 4, 5, 6, 7, 11 bis 16, 18, 19, 21, 22) eine Sendetabelle gespeichert ist, in der für alle von dem Automatisierungsmittel ausgehenden Nachrichtenwege die Bezeichnung des jeweiligen Nachrichtenwegs und Angaben der auf dem jeweiligen Nachrichtenweg abzusendenden Bits oder Wörter und Angaben über die Sendebeauftragung enthalten sind.

8. Vorrichtung nach Anspruch 6 oder 7,
dadurch gekennzeichnet,
daß in mindestens einem Automatisierungsmittel (1, 2, 4, 5, 6, 7, 11 bis 16, 18, 19, 21, 22) eine Empfangstabelle gespeichert ist, in der für alle in dem Automatisierungsmittel endenden Nachrichtenwege die Bezeichnung des jeweiligen Nachrichtenweges und Angaben über die auf dem jeweiligen Nachrichtenweg übertragenen Bits oder Wörter enthalten sind.

9. Vorrichtung nach einem der Ansprüche 6 bis 8,
dadurch gekennzeichnet,
daß in jedem Automatisierungsmittel (1, 2, 4, 5, 6, 7, 11 bis 16, 18, 19, 21, 22) eine Steuertabelle gespeichert ist, in der für alle das Automatisierungsmittel berührenden Nachrichtenwege Leitdaten gespeichert sind, die sich auf die Empfangsstelle im Automatisierungsmittel oder auf das Ziel einer zu übertragenden Nachricht beziehen.

10. Vorrichtung nach Anspruch 9,
dadurch gekennzeichnet,
daß die Steuertabelle als Hash-Tabelle ausgebildet ist, deren Schlüssel jeweils die Bezeichnung des Nachrichtenweges ist.

**Claims**

1. Method for the transmission of messages between automation means (1, 2, 4, 5, 6, 7, 11, to 16, 18, 19, 21, 22), which each display like or different internal structures and as parts of an automation system stand one in connection with the other by way of a message path (42, 43, 50, 51, 53 to 56, 61) selectably either as transmitter or as receiver either directly or with the interposition of one or more automation means, wherein data about the type of the messages to be transmitted are put in for the selection of a receiver for a message transmission in the respective automation means (1, 2, 4, 5, 6, 7, 11 to 16, 18, 19, 21, 22), which data are inserted at an initially fixed place into the messages to be transmitted and converted during transmission by the transmitter into the code provided for the transmission lines (3, 9, 17, 20) as well as converted at the end of the message path (42, 43, 50, 51, 53 to 56, 61) by the receiver into its code provided for the information input, characterised thereby, that the data, which are put into the automation means in the code provided for the information input, are also allotted to the message path (42, 43, 50, 51, 53 to 56, 61) extending between transmitter and receiver and that the physical address of a next automation means, to which the messages to be transmitted are passed on the message path to a target automation means, is determined before the transmission, from a stored control table which contains an entry for each message path touching the automation means, from the data to the message path in the respective automation means.

2. Method according to claim 1, characterised thereby, that statements about the type of the messages are also contained in the messages, which are transmitted between a transmitter and a receiver, at that place which contains the data about the transmission path (42, 43, 50, 51, 53 to 56, 61).

3. Method according to claim 1, characterised thereby, that the data about the type of the transmitted messages are contained in the code for the transmission allotment, which code also fixes the kind of the data and their sequence.

4. Method according to claim 1 or one of the following claims, characterised thereby, that a number is allocated to each message path (42, 43, 50, 51, 53 to 56, 61) between a transmitter and a receiver.

5. Method according to claim 4, characterised thereby, that a freely selectable name is allocated to each member of a message path (42, 43, 50, 51, 53 to 56, 61) in the respective automation means.

6. Device for the performance of the method according to one of the claims 1 to 5, characterised thereby, that a coupling control (25) in each automation means (1, 2, 4, 5, 6, 7, 11 to 16, 18, 19, 21, 22) is connected with the respective transmission line (3, 9, 17, 20) and by way of an interface (26) with a bus control unit (27), which stands in connection by way of a further interface (29) with a superordinated transmission control (28), in which a control table (S18, S19, S20) is stored, which for each message path touching the automation means and subject to consideration of the address of the respective automation means contains a physical target address of a next automation means, to which the messages are passed on the message path to a target automation means.

7. Device according to claim 6, characterised thereby, that a transmission table is stored in at least one automation means (1, 2, 4, 5, 6, 7, 11 to 16, 18, 19, 21, 22), in which table the designation of the respective message path and statements of the bits or words to be sent out on the respective message path and statements about the transmission command are contained for all message paths emanating from the automation means.

8. Device according to claim 6 or 7, characterised thereby, that a reception table is stored in at least one automation means (1, 2, 4, 5, 6, 7, 11 to 16, 18, 19, 21, 22), in which table the designation of the respective message path and statements about the bits or words transmitted on the respective message path are contained for all message paths ending in the automation means.

9. Device according to one of the claims 6 to 8, characterised thereby, that a control table is stored in each automation means (1, 2, 4, 5, 6, 7, 11 to 16, 18, 19, 21, 22), in which table guide data, which relate to the reception point in the automation means or to the target of a message to be transmitted, are stored for all message paths touching the automation means.

10. Device according to claim 9, characterised thereby, that the control table is formed as Hash table, the key of which is each time the designation of the message path.

**Revendications**

1. Procédé de transmission de messages entre des moyens d'automatisation (1, 2, 4, 5, 6, 7, 11 à 16, 18, 19, 21, 22) qui ont des structures internes semblables ou différentes, et qui, comme parties d'un système d'automatisation, sont reliés entre eux, par une voie de transmission (42, 43, 50, 51, 53 à 56, 61), directement ou par interposition d'un ou plusieurs moyens d'automatisation, servant au choix chacun d'émetteur ou de récepteur, des données concernant le type des messages à transmettre étant introduites pour sélectionner un récepteur d'une transmission de messages dans le moyen d'automatisation concerné (1, 2, 4, 5, 6, 7, 11 à 16, 18, 19, 21, 22), ces données étant insérées dans les messages à transmettre, en un emplacement préalablement défini, et converties à l'émission, par l'émetteur, dans le code prévu pour les lignes de transmission (3, 9, 17, 20), ainsi qu'à la fin de la voie de transmission (42, 43, 50, 51, 53 à 56, 61), par le récepteur, dans le code prévu pour l'entrée des informations,
caractérisé en ce que
les données qui sont introduites dans le code prévu pour l'entrée des informations dans le moyen d'automatisation, sont affectées aussi à la voie de transmission (42, 43, 50, 51, 53 à 56, 61) s'étendant entre l'émetteur et le récepteur, et en ce qu'à partir des données envoyées vers la voie de transmission du moyen d'automatisation concerné, on détermine avant l'émission, à partir d'un tableau de commande mis en mémoire, et qui contient une inscription relative à chaque voie de transmission en contact avec le moyen d'automatisation, l'adresse physique d'un moyen d'automatisation suivant à laquelle les messages à transmettre sont transférés sur la voie de transmission menant à un moyen d'automatisation de destination.

2. Procédé selon la revendication 1,
caractérisé en ce que
les messages transmis entre un émetteur et un récepteur contiennent aussi, dans l'emplacement qui contient les données concernant la voie de transmission (42, 43, 50, 51, 53 à 56, 61), des indications relatives au type des messages.

3. Procédé selon la revendication 1,
caractérisé en ce que
les données relatives au type des messages transmis sont contenues dans le code de l'instruction d'émission qui définit aussi la nature des données et leur succession.

4. Procédé selon la revendication 1 ou l'une des revendications suivantes,
caractérisé en ce
qu'un numéro est attribué à chaque voie de transmission (42, 43, 50, 51, 53 à 56, 61), entre un émetteur et un récepteur.

5. Procédé selon la revendication 4,
caractérisé en ce
qu'un nom pouvant être librement choisi, est attribué à chaque numéro d'une voie de transmission (42, 43, 50, 51, 53 à 56, 61), dans le moyen d'automatisation concerné.

6. Dispositif de mise en oeuvre du procédé selon l'une des revendications 1 à 5,
caractérisé en ce que
dans chaque moyen d'automatisation (1, 2, 4, 5, 6, 7, 11 à 16, 18, 19, 21, 22), une commande d'accouplement (25) est reliée à la ligne de transmission (3, 9, 17, 20) concernée, cette commande étant reliée à une interface (26), par une unité de commande de bus (27), laquelle est reliée par une autre interface (29), à une commande de transmission (28) supérieure, dans laquelle un tableau de commande (S 18, S 19, S 21) est mis en mémoire, et qui pour chaque voie de transmission en contact avec le moyen d'automatisation, contient une adresse physique d'un moyen d'automatisation suivant, à laquelle les messages sont transférés sur la voie de transmission menant à un moyen d'automatisation de destination, en tenant compte de l'adresse du moyen d'automatisation concerné.

7. Dispositif selon la revendication 6,
caractérisé en ce que
dans au moins un moyen d'automatisation (1, 2, 4, 5, 6, 7, 11 à 16, 18, 19, 21, 22), est mis en mémoire un tableau d'émission qui contient, pour toutes les voies de transmission partant du moyen d'automatisation, la désignation de la voie de transmission concernée ainsi que des indications relatives aux bits ou aux mots à émettre sur la voie de transmission concernée, et des indications relatives à l'instruction d'émission.

8. Dispositif selon la revendication 6 ou 7,
caractérisé en ce que
dans au moins un moyen d'automatisation (1, 2, 4, 5, 6, 7, 11 à 16, 18, 22) est mis en mémoire un tableau de réception qui contient, pour toutes les voies de transmission aboutissant au moyen d'automatisation, la désignation de la voie de transmission concernée ainsi que des indications relatives aux bits ou aux mots à transmettre par la voie de transmission concernée.

9. Dispositif selon l'une des revendications 6 à 8,
caractérisé en ce que
dans chaque moyen d'automatisation (1, 2, 4, 5, 6, 7, 11 à 16, 18, 19, 21, 22) est mis en mémoire un tableau de commande dans lequel sont stockées, pour toutes les voies de transmission en contact avec le moyen d'automatisation, des données d'acheminement qui se réfèrent à l'emplacement de réception dans le moyen d'automatisation, ou à la destination d'un message à transmettre.

10. Dispositif selon la revendication 9,
caractérisé en ce que
le tableau de commande est un tableau Hash dont la clé est à chaque fois la désignation de la voie de transmission.

Fig. 1

Fig. 2

3

Fig.3

Fig. 4